# FASCICULE DE BREVET EUROPEEN

(11) **EP 3 180 111 B1**
(45) Date de publication et mention de la délivrance du brevet: **24.02.2021**
(21) Numéro de dépôt: 15753395.1
(22) Date de dépôt: 21.07.2015
(51) Int. Cl.: B01D 63/06, B01D 46/24, B01D 65/08, C04B 38/00, B01J 35/04

(54) **ELEMENT DE SEPARATION PAR FLUX TANGENTIEL INTEGRANT DES OBSTACLES A LA CIRCULATION ET PROCEDE DE FABRICATION**
ELEMENT ZUR TRENNUNG ÜBER EINEN TANGENTIALFLUSS UND MIT EINGEBAUTEN FLUSSHINDERNISSEN SOWIE HERSTELLUNGSVERFAHREN
ELEMENT INTENDED FOR SEPARATION VIA TANGENTIAL FLOW AND HAVING BUILT-IN FLOW OBSTACLES, AND MANUFACTURE METHOD

(30) Priorité: 11.08.2014 FR 1457745
(43) Date de publication de la demande: 21.06.2017
(73) Titulaire: Technologies Avancees et Membranes Industrielles, 26110 Nyons (FR)
(72) Inventeur: ANQUETIL, Jérôme, F-84110 Vaison la Romaine (FR)
(74) Mandataire: Cabinet Beau de Loménie
(86) Numéro de dépôt international: PCT/FR2015/052000
(87) Numéro de publication internationale: WO 2016/024058

(56) Documents cités:
- EP-A1- 0 813 445
- WO-A1-2012/032325
- WO-A1-2013/144399
- FR-A1- 2 503 615
- GB-A- 2 223 690

## Description

La présente invention concerne le domaine technique des éléments de séparation par flux tangentiel d'un milieu fluide à traiter en un filtrat et un rétentat, communément appelés membranes de filtration. Plus précisément, l'invention concerne de nouvelles géométries de support poreux multicanaux permettant de réduire, voire supprimer, les problèmes de colmatage, ainsi qu'un procédé de fabrication par méthode additive de tels supports et éléments de séparation par flux tangentiel les comprenant.

Les procédés de séparation utilisant des membranes sont utilisés dans de nombreux secteurs, notamment dans l'environnement pour la production d'eau potable et le traitement des effluents industriels, dans l'industrie chimique, pétrochimique, pharmaceutique, agro-alimentaire et dans le domaine de la biotechnologie.

Une membrane constitue une barrière sélective et permet, sous l'action d'une force de transfert, le passage ou l'arrêt de certains composants du milieu à traiter. Le passage ou l'arrêt des composants résulte de leur taille par rapport à la taille des pores de la membrane qui se comporte alors comme un filtre. En fonction de la taille des pores, ces techniques sont nommées microfiltration, ultrafiltration ou nanofiltration.

Il existe des membranes de structures et textures différentes. Les membranes sont, en général, constituées d'un support poreux qui assure la résistance mécanique de la membrane et donne également la forme et donc détermine la surface filtrante de la membrane. Sur ce support, une ou plusieurs couches de quelques microns d'épaisseur assurant la séparation et dites couches séparatrices, couches de filtration, couches de séparation, ou couches actives, sont déposées. Durant la séparation, le transfert du fluide filtré s'effectue à travers la couche séparatrice, puis ce fluide se répand dans la texture poreuse du support pour se diriger vers la surface extérieure du support poreux. Cette partie du fluide à traiter ayant traversé la couche de séparation et le support poreux est appelée perméat ou filtrat et se trouve récupérée par une chambre de collecte entourant la membrane. L'autre partie est appelée rétentat et est, le plus souvent, réinjectée dans le fluide à traiter en amont de la membrane, grâce à une boucle de circulation.

De manière classique, le support est d'abord fabriqué selon la forme souhaitée par extrusion, puis fritté à une température et pendant un temps suffisant pour assurer la solidité requise, tout en conservant dans la céramique obtenue la texture poreuse ouverte et interconnectée voulue. Ce procédé contraint à l'obtention d'un ou plusieurs canaux rectilignes à l'intérieur desquels sont ensuite déposées et frittées la ou les couches séparatrices. Les supports sont traditionnellement de forme tubulaire et comportent un ou plusieurs canaux rectilignes aménagés parallèlement à l'axe central du support. En général, la surface interne des canaux est lisse et ne présente aucune irrégularité.

Or, il a été constaté que les membranes de filtration fabriquées à partir de supports ayant de telles géométries se heurtent à des problèmes de colmatage et présentent, de ce fait, des performances limitées en termes de débit. En effet, les petites particules et les macromolécules peuvent être adsorbées sur la surface de la couche séparatrice ou s'y déposer en formant un gel ou un dépôt, elles peuvent même pénétrer dans la porosité et bloquer certains pores.

Le principe de toute séparation tangentielle mettant en œuvre des éléments de filtration réside dans un transfert sélectif dont l'efficacité est dépendante de la sélectivité de la membrane (la couche active) et de la perméabilité (flux) de l'élément de filtration considéré dans son entier (support + couche active). La sélectivité et la perméabilité ne sont pas seulement déterminées par les caractéristiques de la couche active et de l'élément de filtration car elles peuvent être réduites ou limitées par l'apparition d'une polarisation de concentration, d'un dépôt et d'un blocage des pores.

Le phénomène de polarisation de concentration opère lors d'une opération de filtration lorsque les macromolécules présentes dans le liquide à traiter se concentrent à l'interface membrane/solution où elles exercent une contre-pression osmotique opposée à la force de séparation ou rétrodiffusent dans le cœur du liquide à traiter selon la loi de Fick. Le phénomène de polarisation de concentration résulte de l'accumulation des composés retenus au voisinage de la membrane du fait de la perméation du solvant.

Le dépôt apparaît lors d'une opération de filtration lorsque la concentration en particules à la surface de la membrane augmente jusqu'à provoquer l'apparition d'une phase condensée sous forme d'un gel ou d'un dépôt cohésif induisant une résistance hydraulique additionnelle à celle de la membrane.

Le blocage des pores opère lorsqu'il y a intrusion de particules de tailles inférieures ou égales à celles des pores, ce qui entraîne une réduction de la surface filtrante.

Le colmatage, sa réversibilité ou son irréversibilité, sont des phénomènes complexes qui dépendent de l'élément de filtration et en particulier des couches séparatrices, du liquide à traiter et des paramètres opératoires.

Le colmatage est un frein important à l'attractivité économique de la filtration car il conduit, lors du dimensionnement des installations de filtration, à accroître les surfaces installées afin de satisfaire les besoins en volumes à traiter d'une part et il rend nécessaire la mise en œuvre de moyens techniques spécifiques pour y remédier *a postériori,* tels des cycles de nettoyage utilisant des détergents ou des rétro-filtrations périodiques d'autre part.

Dans l'art antérieur, il a déjà été proposé de réduire le phénomène de colmatage par la création d'un régime d'écoulement turbulent à l'intérieur du canal d'un élément filtrant.

Tout d'abord, il a été proposé d'introduire dans les éléments tubulaires de filtration des dispositifs destinés à créer des turbulences. On peut notamment se référer à D.M. Krstic et al., Journal of Membrane Science 208 (2002) 303-314. Ces dispositifs permettent d'améliorer le flux de perméat, et par conséquent l'efficacité de la filtration, en limitant le colmatage. Cependant, la mise en place et la fixation de ces dispositifs dans les éléments tubulaires sont difficiles et complexes. De plus, ils provoquent des vibrations gênantes qui nuisent à la fiabilité du matériel.

D'autres systèmes assez complexes ont également été proposés par M.Y. Jaffrin dans Journal of Membrane Science 324 (2008) 7-25 et utilisent des membranes circulaires et un module central qui tournent de manière relative pour créer des turbulences. Ces travaux ont cependant démontré que le taux de cisaillement important obtenu permet de diminuer le colmatage.

D'autres solutions consistent à modifier la géométrie de l'élément tubulaire. Le brevet FR 2 503 615 décrit des tubes cylindriques pour la filtration de mélanges gazeux introduits sous pression, dont la paroi interne comporte des empreintes destinées à créer des turbulences qui évitent l'accumulation d'une des phases gazeuses sur la paroi du tube et améliorent la séparation par diffusion gazeuse. Ces empreintes sont formées en faisant passer les tubes sortant de la filière d'extrusion, entre des rouleaux ou des outils qui déforment localement le tube sur toute l'épaisseur de sa paroi. Le brevet FR 2 503 616 décrit un procédé relevant du même principe, consistant à déformer la paroi du tube à la sortie de la filière d'extrusion par application de molettes disposées face à face, de part et d'autre du tube, ou en positions alternées.

Dans ces deux documents, après l'étape préalable d'extrusion du tube monocanal, une étape de mise en forme finale est donc mise en œuvre par déformation plastique pour l'obtention d'empreintes à l'intérieur du monocanal par la pression d'un poinçon rotatif ou autre sur la surface externe du tube. L'obtention de ces « empreintes » sera plus ou moins facile selon la ductilité du matériau, c'est-à-dire son aptitude à subir une déformation permanente sans se rompre. Or, les pâtes utilisées pour la fabrication de membranes céramiques ne présentent pas une bonne ductilité : elles sont facilement mises en forme par extrusion mais présentent en général un allongement à la rupture inférieur à 5%. De plus, avec de telles techniques, seules des empreintes de faibles dimensions peuvent être obtenues. Enfin, les déformations réalisées sur toute l'épaisseur du tube entraînent des contraintes importantes dans le matériau et des risques de fissuration, ce qui nuit donc fortement à la résistance mécanique. On peut également citer la demande FR 2 736 843 qui propose des tubes poreux comportant un unique canal dont les parois comportent des empreintes, alors que la paroi périphérique du support est lisse. Pour cela, le tube poreux est mis en forme, au moyen d'une filière d'extrusion qui comporte une broche cylindrique disposée suivant son axe, la broche ou la matrice de sortie de la filière étant montée rotative et de section non circulaire. Là encore, cette technique de fabrication est limitée à certains types d'empreinte, à savoir des empreintes qui sont continues d'une extrémité à l'autre de l'élément de séparation et qui ne peuvent engendrer aucune variation de la section de passage du canal. De plus, elle ne peut être transposée à la fabrication d'élément de séparation comportant une série de canaux internes. Or, les éléments de séparation multicanaux sont de plus en plus recherchés car ils permettent d'augmenter la surface filtrante et d'ainsi améliorer les performances.

Dans le même ordre d'idées, le brevet EP 0 813 445 décrit un élément de filtration avec un ou plusieurs canaux comportant chacun une rainure hélicoïdale à pas simple, double ou triple. Cet élément de filtration présente les mêmes inconvénients que l'élément de filtration décrit par le document FR 2 736 843. GB 2 223 690 décrit des structures monolithiques avec une section transversale du canal en forme d'étoile dans une configuration spirale qui peut aller jusqu'à 500 tours par mètre.

Dans ce contexte, la présente invention se propose de fournir de nouveaux éléments de filtration et une technique de fabrication adaptée à leur élaboration, qui présentent une structure monocanale ou multicanale et une géométrie adaptée pour réduire, voire supprimer, les phénomènes de colmatage. L'invention a pour but de fournir de nouveaux éléments de filtration dont la géométrie peut être modulée à façon, pour créer de fortes contraintes de cisaillement pariétales et d'intenses turbulences à l'intérieur des canaux, sans présenter les inconvénients des solutions antérieures.

Pour atteindre un tel objectif, l'invention concerne un élément monolithe de séparation par flux tangentiel d'un milieu fluide à traiter en un filtrat et un rétentat défini dans les revendications 1 à 10, ledit élément de séparation comportant un support poreux rigide rectiligne de structure tridimensionnelle à l'intérieur duquel est aménagé au moins un canal pour la circulation du milieu fluide à traiter en vue de récupérer un filtrat à la surface extérieure du support, la surface extérieure du support présentant un profil constant.

Selon l'invention, le support poreux rigide monolithique comporte à partir de la paroi interne du ou des canaux, des obstacles à la circulation du fluide à filtrer, ayant une identité et une continuité de matériau et de texture poreuse avec le support, ces obstacles gênant ou perturbant le passage du fluide, obligeant leur contournement, en apparaissant entre une première et deuxième positions prises selon l'axe longitudinal du canal.

De plus, l'élément selon l'invention peut présenter en outre en combinaison au moins l'une et/ou l'autre des caractéristiques additionnelles suivantes :
- au moins un obstacle d'un canal génère un rétrécissement brusque ou un convergent dans le sens de circulation du fluide à traiter dans ledit cana! ;
- au moins un obstacle d'un canal engendre une section droite de passage localement la plus étroite à l'endroit dudit obstacle, cette section droite de passage étant perpendiculaire à l'axe longitudinal dudit canal et présentant une forme différente par rapport à des portions du canal situées en aval et en amont dudit obstacle ;
- entre une portion du canal située en amont de la section droite de passage la plus étroite et la section droite de passage la plus étroite, l'un des critères pris parmi la liste suivante reste invariable tandis que les autres critères varient, les critères étant pris parmi la forme, l'aire, le périmètre mouillé et le diamètre hydraulique ;
- entre une portion du canal située en amont de la section droite de passage la plus étroite et la section de passage la plus étroite, tous les critères pris parmi la liste suivante restent invariables à savoir la forme, l'aire, le périmètre mouillé et le diamètre hydraulique ;
- au moins un obstacle d'un canal présente une section de passage droite perpendiculaire à l'axe longitudinal dudit canal, cette section de passage droite tournant autour de l'axe longitudinal dudit canal, entre deux positions prises selon cet axe longitudinal du canal ;
- au moins un obstacle d'un canal présente une section de passage droite tournant autour de l'axe longitudinal dudit canal, de façon discontinue entre les extrémités dudit canal ;
- l'élément comporte au moins une couche séparatrice continûment déposée sur les parois internes des canaux et venant recouvrir entièrement les obstacles ;
- le support poreux est réalisé en un matériau organique ou inorganique ;
- les couches séparatrices voire des couches intermédiaires sont réalisées en un matériau organique ou inorganique ;
- la structure tridimensionnelle du support poreux présente différentes strates pouvant être mises en évidence par microscopie optique ou microscopie électronique à balayage.

Un autre objet de l'invention est de proposer un procédé permettant de réaliser les éléments monolithes de séparation conformes à l'invention.

Le procédé de fabrication d'un élément de séparation par flux tangentiel selon l'invention est défini dans les revendications 11 à 17 et consiste à réaliser la structure tridimensionnelle du support par formation de strates élémentaires superposées et liées successivement entre elles, de manière à faire croître progressivement la forme tridimensionnelle souhaitée.

De plus, le procédé selon l'invention peut consister en outre en combinaison au moins l'une et/ou l'autre des caractéristiques additionnelles suivantes :
- à réaliser la structure dimensionnelle, par répétition des étapes suivantes :
   - réalisation d'un lit continu d'une matière destinée à former le support poreux, le lit étant d'épaisseur constante selon une surface supérieure à la section dudit support poreux prise au niveau de la strate ;
   - consolidation localisée selon un motif déterminé pour chaque strate, d'une partie de matière réalisée pour créer la strate élémentaire, et liaison simultanée de la strate élémentaire ainsi formée à la strate précédente ;
- à réaliser des lits continus de matière solide se présentant sous la forme d'une poudre ou de matière liquide tels que des résines photopolymérisables ;
- à réaliser un lit continu d'une matière solide se présentant sous la forme d'une poudre organique ou inorganique ;
- à réaliser un lit continu d'un milieu se présentant sous la forme d'un précurseur liquide photopolymérisable dans lequel a été disposée une poudre inorganique ;
- en ce que chaque strate est réalisée par fusion continue ou discontinue d'un fil d'un précurseur solide thermofusible qui est soit un polymère organique thermofusible utilisé seul pour réaliser un support organique et une couche organique, ou soit un mélange pour réaliser un polymère organique thermofusible et d'une poudre inorganique céramique, avec un support de nature inorganique ;
- à créer successivement des cordons de matière par projection d'une poudre fondue dans le faisceau d'un laser.

Les éléments de séparation par flux tangentiel obtenus par le procédé défini dans le cadre de l'invention conduit à une croissance de la structure tridimensionnelle du support. Il est à noter que cette structure peut être mise en évidence par la visualisation des différentes strates par microscopie optique ou microscopie électronique à balayage. Bien entendu, il sera recherché que la démarcation entre les différentes strates soit la plus ténue possible.

Diverses autres caractéristiques ressortent de la description faite ci-dessous en référence aux dessins annexés qui montrent, à titre d'exemples non limitatifs, des formes de réalisation de l'objet de l'invention.
La **Figure 1A** est une vue en coupe longitudinale d'un support illustrant un exemple de réalisation d'un obstacle.
Les **Figures 1B** et **1C** sont des coupes transversales du support prises respectivement au niveau de l'obstacle et en amont de l'obstacle en considération du sens de circulation du fluide.
La **Figure 2** est une coupe longitudinale d'un support montrant un obstacle générant un rétrécissement brusque et un convergent.
Les **Figures 3A** et **3B** sont les coupes transversales d'un support prises respectivement en amont et au niveau de l'obstacle, illustrant la variation de la section de passage d'un canal alors que son aire ne varie pas,
Les **Figures 4A et 4B** sont les coupes transversales d'un support prises respectivement en amont et au niveau de l'obstacle, illustrant la variation de la section de passage d'un canal alors que le périmètre mouillé ne varie pas.
Les **Figures 5A et 5B** sont les coupes transversales d'un support prises respectivement en amont et au niveau de l'obstacle, illustrant la variation de la section de passage d'un canal alors que le diamètre hydraulique ne varie pas.
Les **Figures 6A** et **6B** sont des vues en coupe respectivement longitudinale et transversale d'un support illustrant le caractère invariable de la forme de la section de passage du canal alors que ses dimensions varient.
Les **Figures 7A** et **7B** sont des vues en coupe respectivement longitudinale et transversale d'un support illustrant le caractère invariable de la section de passage du canal avec des dimensions invariables.
La **Figure 8** est une vue en coupe partielle longitudinale d'un support illustrant la rotation d'une section de passage localement invariable.

En préliminaire, quelques définitions des termes utilisés dans le cadre de l'invention vont être données.

Par taille moyenne des grains, on entend la valeur d50 d'une distribution volumique pour laquelle 50% du volume total des grains correspondent au volume des grains de diamètre inférieur à ce d50. La distribution volumique est la courbe (fonction analytique) représentant les fréquences des volumes des grains en fonction de leur diamètre. Le d50 correspond à la médiane séparant en deux parties égales, l'aire située sous la courbe des fréquences obtenue par granulométrie, par diffraction laser qui est la technique de référence retenue dans le cadre de l'invention pour la mesure du diamètre moyen des grains. On se réfèrera, en particulier, pour la technique de mesure du d50 :
- à la norme ISO 13320:2009, pour ce qui concerne la technique de mesure par granulométrie laser ;
- à la norme ISO 14488:2007, pour ce qui concerne les techniques d'échantillonnage de la poudre analysée ;
- à la norme ISO 14887:2000, pour ce qui concerne une mise en dispersion reproductible de l'échantillon de poudre dans le liquide avant la mesure par granulométrie laser.

Par diamètre moyen de pores, on entend la valeur d50 d'une distribution volumique pour laquelle 50% du volume total des pores correspondent au volume des pores de diamètre inférieur à ce d50. La distribution volumique est la courbe (fonction analytique) représentant les fréquences des volumes des pores en fonction de leur diamètre. Le d50 correspond à la médiane séparant en deux parties égales, l'aire située sous la courbe des fréquences obtenue par pénétration de mercure, pour des diamètres moyens de l'ordre de quelques nm ou, dans le cas de diamètre de pores plus faibles, par adsorption de gaz, et notamment de N₂, ces deux techniques étant retenues comme références dans le cadre de l'invention pour la mesure du diamètre moyen des pores.

En particulier, on pourra utiliser les techniques décrites dans :
- la norme ISO 15901-1 :2005, pour ce qui concerne la technique de mesure par pénétration de mercure ;
- les normes ISO 15901-2 :2006 et ISO 15901-3 :2007, pour ce qui concerne la technique de mesure par adsorption de gaz.

L'invention propose des éléments de séparation par flux tangentiel d'un milieu fluide à traiter en un filtrat et un rétentat, qui comporte un support poreux monolithique monocanal ou multicanaux dont la géométrie est sélectionnée pour délimiter, à partir des parois internes des canaux, des obstacles à la circulation du fluide à filtrer. De tels supports monolithiques dont les obstacles font partie intégrante de la structure poreuse monolithique sont réalisés, par les techniques additives comme cela sera expliqué dans la suite de la description.

Dans le cadre de l'invention, on vise des éléments de séparation d'un milieu fluide par filtration tangentielle, communément appelés membranes de filtration. De tels éléments de séparation comportent un support poreux dans lequel un ou plusieurs canaux de circulation pour le fluide à filtrer sont aménagés. Classiquement, le support est de forme tubulaire. Ces canaux de circulation présentent une entrée et une sortie. En général, l'entrée des canaux de circulation est positionnée à l'une des extrémités, cette extrémité jouant le rôle de zone d'entrée pour le milieu fluide à traiter et leur sortie est positionnée à l'autre extrémité du support jouant le rôle de zone de sortie pour le rétentat.

Dans de tels éléments de séparation, le corps constituant le support présente une texture poreuse. Cette texture poreuse est caractérisée par le diamètre moyen des pores déduit de leur distribution mesurée par porométrie par pénétration de mercure.

La texture poreuse du support est ouverte et forme un réseau de pores interconnectés, ce qui permet au fluide filtré par la couche séparatrice de filtration de traverser le support poreux et d'être récupéré en périphérie. Il est d'usage de mesurer la perméabilité à l'eau du support pour qualifier la résistance hydraulique du support. En effet, dans un milieu poreux, l'écoulement stationnaire d'un fluide visqueux incompressible est régi par la loi de Darcy. La vitesse du fluide est proportionnelle au gradient de la pression et inversement proportionnelle à la viscosité dynamique du fluide, via un paramètre caractéristique appelé perméabilité qui peut être mesurée, par exemple, selon la norme française NF X 45-101 de Décembre 1996.

Le perméat est donc, quant à lui, récupéré sur la surface périphérique du support poreux. La paroi des canaux est continûment recouverte par, au moins, une couche séparatrice de filtration qui assure la filtration du milieu fluide à traiter. Les couches séparatrices de filtration, par définition, se doivent d'avoir un diamètre moyen de pores inférieur à celui du support. Les couches séparatrices délimitent la surface de l'élément de séparation par flux tangentiel destinée à être en contact avec le fluide à traiter et sur laquelle va circuler le fluide à traiter,

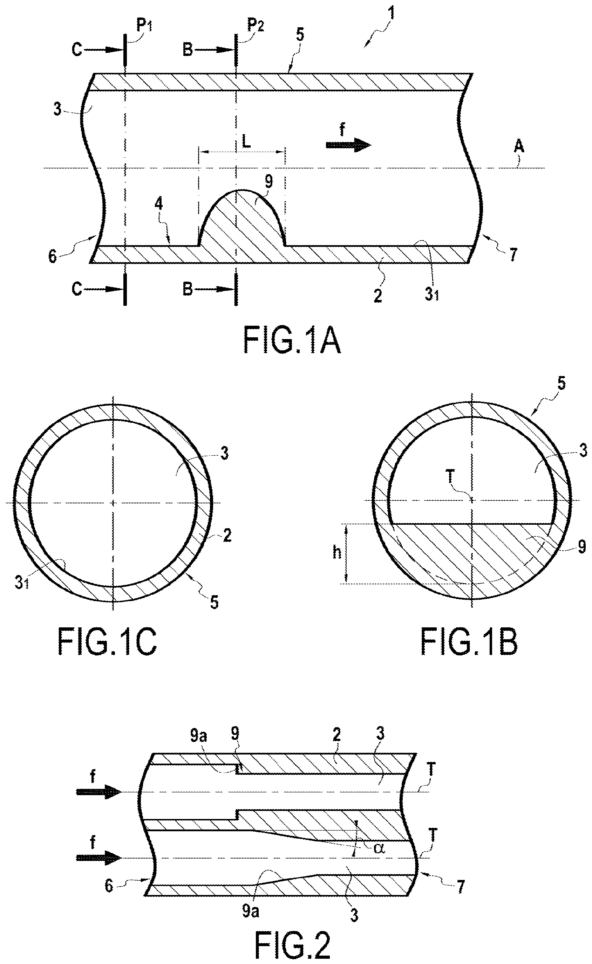

La **Fig. 1** illustre un exemple d'un tel élément de séparation par flux tangentiel **1** de géométrie tubulaire dans laquelle un canal a été aménagé, mais bien d'autres formes pourraient être construites avec le procédé selon l'invention. L'élément de séparation par flux tangentiel **1** comporte un support poreux **2** réalisé sous une forme allongée s'étendant selon un axe central longitudinal **A**, c'est pourquoi la structure de ce support poreux est qualifiée de rectiligne. Le support poreux **2** illustré à la **Fig. 1** possède une section droite transversale circulaire et présente ainsi une surface extérieure **5** cylindrique, mais la section droite transversale pourrait être quelconque ou polygonale. Par section, on entend la figure déterminée par l'intersection d'un volume par un plan, la section droite d'un cylindre étant la figure déterminée par l'intersection d'un plan perpendiculaire à l'axe central longitudinal.

Selon une caractéristique de l'invention, la surface extérieure ou périphérique **5** du support présente un profil constant. Pour rappel, le profil correspond à la forme extérieure du support poreux **2** pris selon un plan transversal contenant l'axe central longitudinal **A**. Dans l'exemple illustré, le profil du support **2** est rectiligne et constant de l'entrée à la sortie. En d'autres termes, un profil constant signifie que toutes les lignes génératrices extérieures parallèles à l'axe central du support sont des droites toutes parallèles entre elles.

En d'autres termes, la surface extérieure **5** ne présente aucune irrégularité de surface autre que celle engendrée par la porosité intrinsèque du matériau ou que celle engendrée par une rugosité de surface inhérente au procédé de mise en forme proprement dit. Ainsi, la surface extérieure **5** ne possède pas de déformation ou d'empreintes.

Le support poreux **2** est aménagé pour comporter au moins un canal **3** et, dans l'exemple illustré à la **Fig. 1**, un canal **3** et, dans l'exemple illustré à la **Fig. 2**, deux canaux **3.** Chaque canal **3** s'étend parallèlement à l'axe **A** du support selon un axe longitudinal **T** qui est confondu avantageusement avec l'axe **A** du support dans le cas d'un support monocanal. Les canaux **3** présentent chacun une surface recouverte par, au moins, une couche séparatrice **4**, destinée à être en contact avec le milieu fluide à traiter, circulant à l'intérieur des canaux **3**. Une partie du milieu fluide traverse la couche séparatrice **4** et le support poreux **2**, de sorte que cette partie traitée du fluide, appelée perméat, s'écoule par la surface extérieure **5** du support poreux. Le fluide à filtrer circule entre une zone d'entrée et une zone de sortie selon un sens de circulation représenté par la flèche **f**. Dans l'exemple illustré, la zone d'entrée **6** est située à une extrémité du support tubulaire et la zone de sortie **7** à l'autre extrémité.

Les épaisseurs des couches séparatrices de filtration varient typiquement entre 1 µm et 100 µm d'épaisseur. Bien entendu, pour assurer sa fonction de séparation, et servir de couche active, les couches séparatrices présentent un diamètre moyen de pores inférieur au diamètre moyen de pores du support. Le plus souvent, le diamètre moyen de pores des couches séparatrices de filtration est au moins inférieur d'un facteur **3**, et de préférence, d'au moins un facteur **5** par rapport à celui du support.

Les notions de couche séparatrice de microfiltration, ultrafiltration et nanofiltration sont bien connues de l'homme de l'art. Il est généralement admis que :
- les couches séparatrices de microfiitration présentent un diamètre moyen de pores compris entre 0,1 et 2 µm ;
- les couches séparatrices d'ultrafiltration présentent un diamètre moyen de pores compris entre 0,1 et 0,01 µm ;
- les couches séparatrices de nanofiltration présentent un diamètre moyen de pores compris entre 0,5 et 2 nm.

Il est possible que cette couche de micro ou d'ultrafiltration, dite couche active, soit déposée directement sur le support poreux (cas d'une couche de séparation monocouche), ou encore sur une couche intermédiaire de diamètre moyen de pores moindre, elle-même déposée directement sur le support poreux (cas d'une couche de séparation monocouche).

La couche de séparation peut, par exemple, être à base de, ou constituée exclusivement, d'un ou plusieurs oxydes métalliques, carbures ou nitrures ou autres céramiques ; les céramiques regroupant tous les matériaux inorganiques non métalliques. En particulier, la couche de séparation sera à base de, ou constituée exclusivement de TiO₂, Al₂O₃ et ZrO₂, seul ou en mélange.

La couche de séparation peut aussi, par exemple, être à base de, ou constituée exclusivement, d'un collodion d'un polymère déposé sur un support poreux de nature organique. La couche de séparation peut encore, par exemple, être à base de, ou constituée exclusivement, d'un métal déposé sur un support poreux de nature métallique.

Selon une caractéristique essentielle de l'invention, le support est façonné pour comporter au moins un et d'une manière générale une série d'obstacles **9** partant des parois internes **3₁** des canaux et qui sont aptes à générer des perturbations dans l'écoulement et des forces de cisaillement d'amplitude suffisante pour faire apparaître des recirculations, limitant ainsi, voire même évitant totalement, les phénomènes de colmatage. Les obstacles font partie intégrante du support poreux monolithique, c'est-à-dire qu'il résulte de la géométrie même donnée au support poreux et ne sont nullement des éléments rapportés. L'ensemble support et obstacles forme un même monolithique poreux, sans liaison, ni interface, ni joint d'aucune sorte.

Il existe une identité de matériau et de texture poreuse entre les obstacles **9** et le support poreux **2** ainsi qu'une continuité de matériau et de texture poreuse entre les obstacles **9** et le support poreux **2**. Ainsi, les obstacles **9** sont solides mécaniquement et chimiquement d'égale résistance que le support. Les obstacles **9** sont recouverts entièrement par la couche séparatrice, de sorte qu'ils ne réduisent pas, mais au contraire augmentent la surface filtrante de l'élément de séparation.

L'identité de matériaux entre les obstacles **9** et le support **2** s'entend d'une nature chimique en tous points identiques, c'est-à-dire identique dans le support poreux et les obstacles.

L'identité de texture poreuse s'entend de la porosité, de la tortuosité, taille et distribution des pores en tous points identiques de l'élément, à savoir dans les obstacles et le support poreux.

La continuité de matériau s'entend de la nature chimique en tous points de l'élément identique c'est-à-dire qu'il n'existe aucune discontinuité chimique entre l'obstacle et le support poreux.

La continuité de texture poreuse s'entend de la porosité, tortuosité, taille et distribution des pores en tous points identiques de l'élément de sorte que n'apparaît aucune discontinuité de texture poreuse entre l'obstacle et le support poreux.

Les obstacles ont pour rôle de se trouver sur le trajet du fluide qui circule à l'intérieur des canaux. Les obstacles **9** gênent ou perturbent le passage du fluide à traiter, obligeant leur contournement, en apparaissant entre une première position **P1** et une deuxième position **P2** prise selon l'axe longitudinal **T** du canal. Ainsi, la première position **P1**, telle que définie par la vue en coupe C-C du canal (**Fig. 1C**), est prise immédiatement en amont de l'obstacle **9** dans le sens de la circulation du fluide à traiter illustré par la flèche **f** tandis que la deuxième position **P2**, telle que définie par la vue en coupe B-B du canal (**Fig. 1B**) est prise à l'endroit de l'obstacle **9**, située en aval de la première position **P1**, selon le sens de circulation **f** du fluide à traiter. Les obstacles **9** entraînent ainsi des augmentations de la vitesse de circulation du liquide au droit de chacun d'eux, générant de fortes contraintes de cisaillement pariétales et des zones de turbulences où les phénomènes de colmatage sont réduits voire même supprimés. Les obstacles jouent le rôle de promoteurs de turbulences.

Les obstacles **9** présentent d'une manière générale, une longueur **L** prise selon l'axe longitudinal **A** du canal et une hauteur **h** prise selon une direction perpendiculaire à l'axe longitudinal **A** et à partir de la paroi intérieure **3₁** du canal. Dans l'exemple illustré à la **Fig. 1**, le canal **3** présente un même diamètre **D** en amont et en aval de l'obstacle **9**.

Les obstacles **9** peuvent être présents à intervalles réguliers ou irréguliers. Les nouvelles géométries de support envisagées dans la présente invention présentent une répétition d'un ou de plusieurs obstacles démarrant de la paroi de chaque canal dont ils sont solidaires.

En particulier, les parois internes des canaux intégrant les obstacles peuvent comporter des reliefs tels que des creux, des bosses, des cannelures, des stries et/ou toutes autres morphologies capables d'agir comme autant d'obstacles jouant le rôle de promoteurs de turbulences lors de l'écoulement du fluide à l'intérieur desdits canaux.

D'une manière générale, il doit être considéré qu'un obstacle **9** engendre une section droite de passage localement modifiée pour ce qui est de sa forme, de son aire, de son périmètre mouillé ou de son diamètre hydraulique ou localement décalée ou encore subissant une rotation à l'endroit du canal **3** par rapport à des portions du canal situées en aval et en amont dudit obstacle, cette section droite de passage pour le fluide étant prise perpendiculairement à l'axe longitudinal **T** dudit canal.

Tel que cela ressort plus précisément de la **Fig. 2**, un obstacle **9** génère, dans le sens de circulation du fluide dans le canal représenté par la fièche **f**, un rétrécissement brusque ou un convergent comme illustré dans les canaux respectivement haut et bas de la **Fig. 2****.** Le rétrécissement brusque présente une paroi radiale **9ₐ** qui s'étend perpendiculairement à l'axe longitudinal **T**, à partir de la paroi interne du canal. Le convergent présente une paroi **9ₐ** inclinée par rapport à l'axe longitudinal **T**, selon un angle α strictement supérieur à 0° et inférieur à 90°. Bien entendu, cette paroi radiale ou inclinée **9ₐ** peut être raccordée à la paroi intérieure du canal à l'aide ou non de congés de raccordement

Bien entendu, les obstacles **9** peuvent présenter des géométries très diversifiées pour gêner ou perturber le passage du fluide. Les exemples qui suivent décrivent diverses géométries des obstacles **9** apparaissant entre une portion du canal situé en amont de la section droite de passage la plus réduite ou étroite et ladite section droite de passage la plus réduite ou étroite, correspondant respectivement à une première position et à une deuxième position.

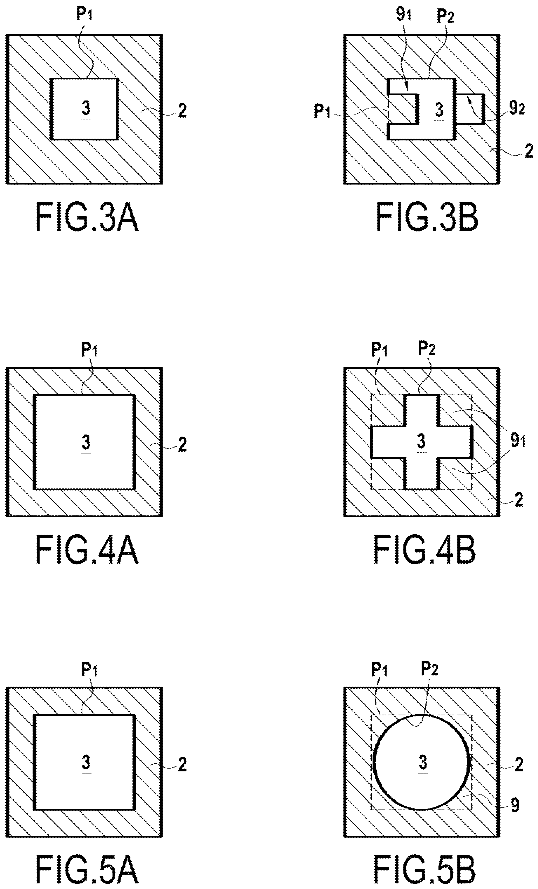

Les **Fig. 3A** et **3B** illustrent une première variante de réalisation dans laquelle la forme de la section de passage du canal varie entre les première et deuxième positions alors que l'aire de la section de passage reste invariable.

Au niveau de la première position, le canal présente une section droite carrée de côté **a** de sorte que l'aire de cette section droite est égale à **a²** (**Fig. 3A**). A cette position, le canal présente un diamètre hydraulique **Dh**=4**A**/**P**, avec **A** l'aire de la section de passage du canal et **P** le périmètre mouillé de cette section de passage. Selon cet exemple, l'aire **A** est égale à **a²** et le périmètre mouillé est égale à **4a** de sorte que le diamètre hydraulique **Dh**=**a**.

Le canal possède au niveau de la deuxième position, un obstacle carré **9₁** de côté a/2 et un obstacle complémentaire **9₂** en creux (**Fig. 3B**). L'aire **A** de la section droite de passage au niveau de cette deuxième position est égale à **A**=**a**²-(**a**/2)²+(**a**/2)²=**a**². L'aire de la section droite du canal ne varie pas. Par contre, le diamètre hydraulique varie puisqu'il est égal à **Dh**=4**a**²/6**a**=2/3**a**, avec le périmètre mouillé **P**=6**a** qui varie également.

Les **Fig. 4A** et **4B** illustrent une deuxième variante de réalisation dans laquelle la forme de la section de passage du canal varie alors que le périmètre mouillé **P** reste invariable, le diamètre hydraulique **Dh** et l'aire **A** de la section de passage du canal étant variables. Selon cet exemple, le canal **3** présente au niveau d'une première position illustrée à la **Fig. 4A**, une section droite carrée de côté **3a,** soit une aire **A** égale à 9**a**², un périmètre mouillé **P**=12**a** et un diamètre hydraulique **Dh**=3**a**.

Le canal **3** possède au niveau de la deuxième position, un obstacle constitué par quatre parties **9₁** de section droite carrée de côté **a** placés à chaque coin de la section du canal. (**Fig. 4B**). Au niveau de cette deuxième position, le périmètre mouillé **P** est égale à 12**a** et ne change pas alors que l'aire **A**=5 **a²** varie ainsi que le diamètre hydraulique **Dh**=5/3**a**.

Les **Fig. 5A** et **5B** illustrent une troisième variante de réalisation dans laquelle la forme de la section de passage du canal varie alors que le diamètre hydraulique **Dh** ne varie pas, bien que l'aire **A** et le périmètre mouillé **P** de la section du canal varient. Selon cet exemple, le canal présente au niveau de la première position illustrée à la **Fig. 5A**, une section droite carrée de côté **a**, soit une aire **A**=**a**², un périmètre mouillé **P**=4**a** et un diamètre hydraulique **Dh**=4 **a**²/4**a**=a.

Le canal possède au niveau de la deuxième position (**Fig. 5B**), une section droite circulaire de rayon **r**=**a**/2, de sorte que faire **A**=π **r**²=π**a**²/4, le périmètre mouillé **P**=π**a** et le diamètre hydraulique **Dh**=π**a**²/π **a**=**a**.

Ainsi, le diamètre hydraulique reste invariable tandis que la forme de la section du canal varie. Il est à noter qu'entre les premières et deuxième positions, les dimensions varient sans rotation de la section et sans excentration par rapport à l'axe central du support mais il clair qu'il peut être prévu une rotation de la section et/ou une excentration par rapport à l'axe central du support.

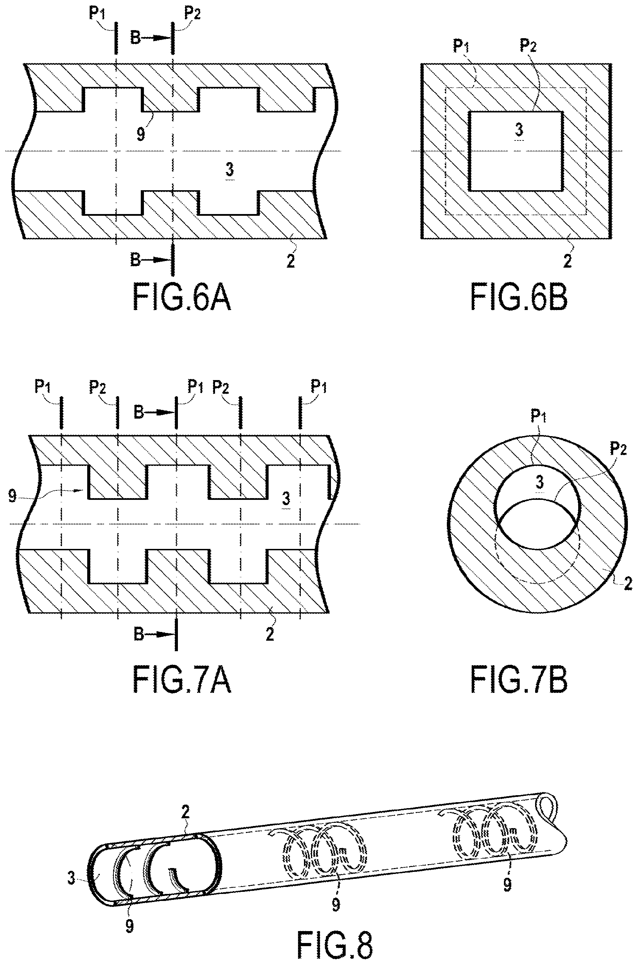

Les **Fig. 6A**, **6B** illustrent une quatrième variante de réalisation selon laquelle la forme de la section du canal est invariable alors que l'aire, le périmètre mouillé et le diamètre hydraulique de la section du canal varient. Le canal présente en une première position **P1**, une forme rectangulaire et en une deuxième position **P2**, une section droite réduite de forme rectangulaire. Il est à noter qu'entre les première et deuxième positions, les dimensions varient sans rotation de la section et sans excentration par rapport à l'axe central du support mais il clair qu'il peut être prévu une rotation de la section et/ou une excentration par rapport à l'axe central du support.

Dans les exemples qui précèdent, l'un des critères pris parmi la liste suivante reste invariable tandis que les autres critères varient, les critères étant pris parmi la forme, l'aire, le périmètre mouillé et le diamètre hydraulique.

Dans l'exemple illustré aux **Fig. 7A**, **7B** la forme de la section de passage du canal **3** reste invariable ainsi que, le périmètre mouillé et le diamètre hydraulique de la section de passage du canal. Le canal présente en une première position **P1**, une forme circulaire et en une deuxième position **P2**, une forme circulaire de même dimension mais décalée par rapport à la section de passage prise à la première position. L'obstacle **9** est généré par l'excentration de la section de passage circulaire, Bien entendu, la forme de la section de passage peut être quelconque. L'obstacle **9** génère ainsi un rétrécissement brusque. Il est à noter qu'au niveau de l'intersection entre deux parties de section de passage excentrées, l'aire de la section de passage varie. Ainsi, l'aire de la section de passage du canal **3** reste invariable sauf au niveau de l'intersection entre deux parties de section de passage excentrées. Dans l'exemple illustré, la section de passage du canal est un disque.

Il est à noter que la même fonction de génération d'un obstacle **9** peut être obtenue par la rotation d'une section de passage non circulaire. Tel est le cas, par exemple pour une section de passage du canal **3** réalisée sous la forme d'un triangle isocèle dont la forme reste invariable ainsi que l'aire, le périmètre mouillé et le diamètre hydraulique de la section de passage du canal. Le canal présente ainsi, en une première position, une forme triangulaire et en une deuxième position, une forme triangulaire mais décalée angulairement d'une valeur donnée, par exemple égale à 90°.

La **Fig. 8** illustre un autre exemple de réalisation dans laquelle l'orientation de l'obstacle **9** à l'intérieur du canal **3** intervient. Selon cet exemple, l'obstacle **9** présente une section droite de passage perpendiculaire à l'axe longitudinal **T** du canal, cette section droite de passage tournant autour de l'axe longitudinal **T** du canal, entre deux positions **P1**, **P2,** prises selon cet axe longitudinal **T**. Cette section droite de passage tourne de façon discontinue entre les extrémités du canal, c'est-à-dire que la longueur de l'obstacle est inférieure à la longueur du canal. Par exemple, l'obstacle **9** se présente sous la forme d'au moins une hélice pariétale de sorte que des tronçons d'hélice apparaissent entre rentrée et la sortie du canal. Selon cet exemple de réalisation, la section droite transversale du canal **3** par sa forme et son aire notamment, varie entre l'entrée et la sortie du canal **3**. Ainsi, au moins un tel obstacle génère un rétrécissement brusque dans le sens de circulation du fluide à traiter.

Dans le cadre de l'invention, la fabrication du support poreux, voire de l'élément de séparation par flux tangentiel dans son entier, est réalisée grâce à une technique additive. Le procédé selon l'invention consiste à réaliser la structure tridimensionnelle du support par formation de strates élémentaires superposées et liées successivement entre elles de manière à faire croître progressivement la structure tridimensionnelle du support.

Le procédé a l'avantage, par rapport aux techniques antérieures, de réaliser le support en une seule étape de production ne nécessitant pas d'outillage, ni d'usinage, et donc de permettre l'accès à une plus grande gamme de géométries de support et permet de faire varier les formes et dimensions des obstacles dans les canaux.

Dans le cas de l'utilisation d'une matière solide telle qu'une poudre, l'épaisseur du lit de poudre et donc de chaque strate successivement consolidée est relativement faible pour permettre sa liaison à la strate inférieure, par application de l'apport d'énergie ou projection du liquide. En particulier, une épaisseur de 20 µm à 200 µm de poudre sera déposée, cette épaisseur étant fonction de la technique additive sélectionnée.

C'est la répétition de la séquence binaire qui permet, strate après strate, de construire la forme tridimensionnelle souhaitée, Le motif de consolidation peut varier d'une strate à l'autre. La croissance de la forme tridimensionnelle souhaitée est réalisée selon un axe de croissance choisi.

La granulométrie de la poudre déposée est un des facteurs qui détermine l'épaisseur minimum de chaque lit de poudre, ainsi que le diamètre moyen des pores final obtenu. En particulier, on utilisera une poudre de la matière destinée à constituer le support, par exemple une poudre d'oxyde métallique, voire une poudre de l'un de ses précurseurs. La poudre déposée présentera, par exemple, une taille moyenne de grains de l'ordre de 35 µm pour l'obtention d'un diamètre moyen de pores dans le support en céramique de l'ordre de 10 µm.

La demanderesse a constaté que le réglage de différents paramètres tels que le choix du matériau et, pour un matériau donné, la taille moyenne des grains de la poudre mise en œuvre, et, pour un matériau et une granularité donnés, l'épaisseur du lit de poudre répété couche après couche d'une part et le réglage de différents paramètres propres à la technologie choisie pour la consolidation permet l'obtention et la maîtrise d'une texture poreuse résiduelle interconnectée au sein du monolithe consolidé. Cette texture poreuse résiduelle est le résultat d'un frittage contrôlé des grains de poudre laissant des vides inter-granulaires interconnectés.

Dans le cas de l'utilisation d'un faisceau d'énergie, les principaux paramètres, sur lesquels il est possible d'agir, sont sa focalisation c'est-à-dire le diamètre du faisceau au niveau de l'impact avec le lit de poudre, la vitesse de balayage du lit de poudre par le faisceau de photons ou d'électrons ou encore le taux de recouvrement des surfaces d'impact du faisceau d'énergie lors de la constitution d'une strate.

Dans le cas de l'utilisation d'une projection de liquide, les principaux paramètres sur lesquels il est possible d'agir, sont le poids des gouttes, leur fréquence, la vitesse de balayage du lit de poudre par le « jet » de gouttes ou encore le taux de recouvrement lors de chaque passage.

La demanderesse a également constaté qu'il était possible, en modulant les différents paramètres précédemment décrits, d'ajuster la distribution en taille des pores et, pour chaque population de pores donnée, de maîtriser leur nombre et leur tortuosité.

Une fois la poudre agglomérée dans les zones sélectionnées, la matière non agglomérée est éliminée par toute technique appropriée. La fluidité initiale de la poudre utilisée facilite cette opération. Il est possible également d'utiliser des techniques de jet d'eau ou des vibrations pour se débarrasser des dernières traces de poudre restant en surface de la forme réalisée.

La consolidation finale de l'élément filtrant et l'état final de la texture poreuse sont, le plus souvent, obtenus par un ou plusieurs post-traitements thermiques qui ont pour objectif l'élimination des liants (déliantage) et/ou le frittage du matériau proprement dit. La température choisie pour un tel frittage final sera fonction de la nature du matériau inorganique utilisé et de la taille moyenne des grains de la poudre utilisée.

Le support, voire l'élément de séparation par flux tangentiel dans son entier, est ainsi réalisé strate après strate. Pour cela, en amont, grâce à un logiciel de conception par ordinateur, la structure tridimensionnelle du support ou de l'élément de séparation par flux tangentiel à réaliser, est découpée en tranches. L'objet virtuel en trois dimensions à réaliser est ainsi découpé en tranches bidimensionnelles de très fine épaisseur. Ces fines tranches vont alors être réalisées une à une, sous forme de strates élémentaires superposées et liées entre elles, de manière à faire croître progressivement la forme tridimensionnelle souhaitée.

Cette structure tridimensionnelle est réalisée :
- soit par la répétition des étapes suivantes :
   - réalisation d'un lit d'une matière solide (poudre organique ou inorganique) ou liquide (précurseur organique ou liquide dans lequel est dispersée une poudre qui peut être organique ou inorganique) destinée à former le support poreux, le lit étant d'épaisseur constante selon une surface supérieure à la section dudit support poreux prise au niveau de la strate ;
   - consolidation localisée selon un motif déterminé pour chaque strate, d'une partie de matière réalisée pour créer la strate élémentaire, et liaison simultanée de la strate élémentaire ainsi formée à la strate précédente ;
- soit par la création successive de cordons de matière formés suite à la fusion d'une poudre organique ou inorganique projetée dans le faisceau d'un laser selon le motif prédéterminé pour chaque strate ;
- soit par fusion continue ou discontinue (goutte) d'un fil d'un précurseur solide thermofusible. Quand le précurseur est un polymère organique thermofusible utilisé seul le support est de nature organique et immédiatement utilisable pour le dépôt d'une couche de nature organique, Quand le précurseur est un mélange d'un polymère organique thermofusible et d'une poudre inorganique céramique ou métallique, le support est, après élimination du polymère servant de liant et après frittage des grains de la poudre inorganique, de nature inorganique.

D'une manière générale dans le premier cas la matière utilisée est soit solide ou liquide et la consolidation des strates élémentaires est réalisée par un apport d'énergie ou par projection d'un liquide en fines gouttelettes. L'apport localisé d'énergie peut se faire avec un faisceau de lumière dirigé (LED ou LASER) ou un faisceau d'électrons dirigés, ou encore avec toute source d'énergie autorisant sa focalisation et un balayage du lit de poudre selon le motif sélectionné par CAO. L'interaction énergie-matière conduit alors, soit à un frittage, soit à une fusion/solidification de la matière, soit encore à une photo-polymérisation ou photo-réticulation de la matière, selon sa nature et celle de la source d'énergie utilisée.

L'apport localisé de liquide sur un lit de poudre peut se faire avec des microgouttelettes créées à l'aide d'un système piézo-électrique, éventuellement chargées et dirigées dans un champ électrostatique. Le liquide sera un liant ou un agent activateur du liant préalablement ajouté à la poudre céramique.

L'utilisation d'une technique additive envisagée dans le cadre de l'invention permet d'obtenir, par rapport aux techniques antérieures, d'une part, un gain en termes de fiabilité et cadence de production, et d'autre part une grande variabilité quant au choix des formes du support et des formes et reliefs qui peuvent être conformés dans le ou les canaux à l'intérieur du support.

Différentes techniques additives pouvant être utilisées, dans le cadre de l'invention, pour la conception de la forme tridimensionnelle, sont détaillées ci-après :

### La SLS (de l'anglais Selective Laser Sintering) ou SLM (de l'anglais Selective Laser Melting)

Avec cette technique, une poudre de la matière destinée à constituer le support ou l'élément de séparation par flux tangentiel, une poudre organique ou, de préférence, une poudre d'un matériau inorganique métallique ou céramique du type oxyde, nitrure ou carbure, voire une poudre de l'un de ses précurseurs, est déposée pour former un lit continu. Le faisceau d'un laser puissant est alors appliqué localement selon le motif sélectionné et permet d'agglomérer la poudre pour former la strate correspondant au support ou à l'élément de séparation, par flux tangentiel et la lier à la strate précédente par frittage. Sous l'effet de l'apport d'énergie localisé, les grains de la poudre fusionnent partiellement et se soudent entre eux, ce qui donne sa cohésion à la strate, réalisant ainsi un pré-frittage de la forme en cours de réalisation. Un nouveau lit de poudre est ensuite étalé et le processus recommence.

Le faisceau du laser balaye la surface de la poudre de manière à consolider la matière selon le motif souhaité, strate par strate. Ce balayage peut être réalisé en déplaçant le laser selon des trajectoires parallèles. Il peut être avantageux qu'il y ait un recouvrement de la surface d'impact du laser entre deux trajectoires parallèles successives. La quantité d'énergie reçue par le lit de poudre à l'endroit de l'impact du faisceau laser doit être telle que la fusion des grains de poudre reste partielle ou dans tous les cas que chaque grain fusionne suffisamment pour se lier avec ses plus proches voisins sans fermer la texture poreuse.

Les réglages de la machine dépendront donc, notamment, des caractéristiques intrinsèques du lit de poudre et de la nature du matériau déterminant l'efficience de l'interaction photons/matière.

A titre indicatif, les conditions correspondant aux gammes présentées dans le **TABLEAU 1** ci-dessous pourront être utilisées :

**TABLEAU 1**

| | Min | Max |
|---|---|---|
| Taille moyenne des grains de la poudre céramique | 10 µm | 100 µm |
| Epaisseur du lit de poudre | 40 µm | 200 µm |
| Puissance du Laser | 50 W | 1000 W |
| Vitesse de déplacement du laser | 0,5 m/s | 10 m/s |

En ajustant localement la focalisation du faisceau laser et/ou la vitesse de déplacement du faisceau, il est possible d'ajuster la quantité d'énergie reçue par le lit de poudre et donc d'ajuster la densification du matériau céramique obtenu et, de ce fait, sa texture poreuse. Il est ainsi possible d'obtenir, à certains endroits, une texture poreuse correspondant à celle souhaitée pour la couche séparatrice de filtration, et à d'autres, celle souhaitée pour le support.

Bien que le frittage soit réalisé au fur et à mesure de la conception du support ou de l'élément de séparation par flux tangentiel, par application du laser, une étape finale de frittage pourra être avantageusement réalisée, une fois la croissance du support ou de l'élément de séparation par flux tangentiel achevée, afin de libérer les contraintes mécaniques résiduelles et d'homogénéiser la texture poreuse. La température choisie pour un tel frittage final sera fonction de la nature du matériau inorganique utilisé et de la taille moyenne des grains de la poudre utilisée; par exemple, une température de 1300°C à 1500°C sera utilisée dans le cas de l'oxyde de titane.

Il est à noter que la fusion sélective de la poudre décrite ci-dessus peut être obtenue de manière analogue par un faisceau d'électrons correspondant à la technique EBM (Electron Beam Melting).

### L'impression 3D

Le principe reste le même, mais dans ce cas, les strates déposées peuvent correspondre à un mélange de poudre organique ou inorganique, céramique ou métallique, de la matière constitutive du support, voire d'un de ses précurseurs, avec un liant lui-même sous la forme d'une poudre ou enrobant la poudre inorganique elle-même. De préférence, ce mélange sera homogène et les particules de poudre de la matière constitutive du support, voire d'un de ses précurseurs, et celles du liant présenteront des tailles proches. A titre d'exemples de liants, on peut citer les résines furaniques, phénoliques et autres aminoplastes. Le pourcentage massique de liant sera compris entre 1 et 25% selon sa nature et le diamètre moyen de la poudre utilisé. Ensuite, un agent activateur du liant est projeté sous la forme de très fines gouttelettes selon le motif sélectionné et entraîne localement l'agglomération de la poudre. L'agent activateur peut être un solvant du liant, qui après séchage quasi-instantané, permet de lier par collage les particules inorganiques entre elles ou les emprisonne à l'intérieur d'un réseau solide.

Il est également possible de déposer uniquement une poudre organique ou inorganique, céramique ou métallique, de la matière destinée à constituer le support, voire une poudre de l'un de ses précurseurs, pour former un lit continu et ensuite de projeter localement un liant qui sera alors une colle liquide à séchage rapide ou une résine liquide thermodurcissable.

La projection de liant ou d'agent activateur qui se trouve sous forme liquide est réalisée selon tout dispositif approprié, notamment un système piézo-électrique utilisé dans les imprimantes du type jet d'encre avec un balayage qui peut être réalisé en déplaçant la tête d'impression selon des trajectoires parallèles. Il peut être avantageux qu'il y ait un recouvrement de la surface d'impact des gouttes entre deux trajectoires parallèles successives.

Après élimination de la poudre non agglomérée, le liant est éliminé lors du traitement thermique de frittage, ce déliantage étant terminé le plus souvent avant 500°C.

L'impression 3D permet, avec des tailles moyennes des grains de la poudre céramique comprises entre 30 et 100 µm de réaliser des épaisseurs du lit de poudre entre 80 et 300 µm et d'atteindre des vitesses de construction linéaire de la forme souhaitée comprises entre 25 et 100 mm/heure.

### La LCM (Lithography-based Ceramic Manufacturing

La LCM est une technique pour laquelle la poudre céramique est pré-mélangée à une résine photo-polymérisable, la consolidation par polymérisation étant obtenue avec une source de lumière LED ou LASER. Comme pour les techniques précédemment décrites, il est nécessaire de supprimer la poudre non réticulée avant le cycle thermique de frittage qui permet le déliantage c'est-à-dire l'élimination de la résine photo-polymérisable puis le frittage proprement dit.

L'utilisation de la LCM est limitée, de par le fait que, les grains de poudre doivent être transparents aux longueurs d'ondes considérées pour une polymérisation en volume sous et autour de l'impact lumineux.

### Le FDM (Fused Déposition Modeling)

Le FDM est une technique utilisant un polymère organique solide thermo fusible auquel est ajoutée éventuellement une poudre inorganique. Cette technique vise à créer des dépôts successifs de cordons de matière à partir d'un fil ou d'un ruban. Le cordon de matière est réalisé par ramollissement ou fusion continue (extrusion) ou discontinue (goutte) de l'extrémité du fil ou du ruban. A l'inverse des techniques précédentes, il n'y a pas formation d'un lit de matière préalable. La consolidation des strates ou cordons de matière est réalisée par chauffage.

Selon une variante à cette technique, il peut être prévu de projeter une poudre inorganique pour assurer la création successive de cordons de matière, cette poudre projetée dans un faisceau d'un laser fusionnant avant l'impact

### La Stéréolithographie (Stereolithography Apparatus SLA)

Cette technique, similaire dans le principe aux techniques précédentes, utilise une matière liquide tel un précurseur liquide photodurcissable dans lequel est incorporée une poudre inorganique. Le faisceau de photons (LED ou laser) balaye la couche de liquide et la polymérise localement.

Dans le cas de l'impression 3D ou de la LCM, la ou les couches séparatrices de filtration seront déposées une fois le support constitué, après l'opération finale de frittage. Le dépôt d'une couche séparatrice, notamment à la surface des canaux et des obstacles dans ces canaux du support consistera à déposer sur ce dernier une suspension contenant au moins une composition frittable destinée, après cuisson, à constituer une couche filtrante. Une telle composition présente une constitution classiquement utilisée dans la production des membranes inorganiques de filtration. Cette composition contient au moins un oxyde, un nitrure, un carbure, ou un autre matériau céramique ou un de leur mélange, les oxydes, nitrures et carbures métalliques étant préférés. La composition frittable est mise en suspension, par exemple, dans de l'eau. Pour éliminer le risque de présence d'agrégats et pour optimiser la dispersion des grains dans le liquide, la suspension obtenue est broyée, afin de détruire les agrégats et obtenir une composition composée essentiellement de particules élémentaires. La rhéologie de la suspension est ensuite ajustée avec des additifs organiques pour satisfaire aux exigences hydrodynamiques de pénétration dans les canaux des supports. La couche une fois déposée, celle-ci est séchée, puis frittée à une température qui dépend de sa nature, de la taille moyenne de ses grains et du seuil de coupure visé.

Dans le cas de la SLS ou de la SLM, la ou les couches séparatrices de filtration peuvent être générées simultanément avec la croissance du support ou bien déposées ultérieurement selon les méthodes de dépôt classiques utilisées dans la production de membrane. Là encore, la ou les couches séparatrices de filtration peuvent être déposées à partir de suspensions de particules de la matière inorganique à déposer, ou d'un de ses précurseurs. De telles suspensions sont classiquement utilisées dans la production des éléments de filtration céramiques. Cette ou ces couches sont soumises après séchage à une opération de frittage qui permet de les consolider et de les lier à la surface sur laquelle elles sont déposées. La granulométrie des particules présentes dans la suspension sera fonction de la texture poreuse souhaitée au final pour la couche séparatrice de filtration.

Les exemples, ci-après, illustrent l'invention, mais n'ont aucun caractère limitatif.

Des éléments tubulaires de séparation par flux tangentiel, du type de celui présenté sur les figures, sont fabriqués conformément à l'invention. Le support se présente sous la forme d'un tube de 300 mm à 1200 mm de long, dont la section droite transversale est circulaire, et présente un diamètre de 10 mm à 42 mm et dans lequel un ou plusieurs canaux rectilignes parallèles à l'axe du tube sont aménagés.

### Exemple 1 : SLS / support seul

| Matériau | Oxyde de titane |
|---|---|
| Taille moyenne des grains de la poudre | 35-45 µm |
| Epaisseur du lit de poudre | 50 µm |
| Focalisation (diamètre du faisceau laser au point d'impact avec la poudre) | 240 µm |
| Atmosphère de la chambre | Air |
| Puissance du laser | 200 W |
| Vitesse de déplacement du laser | 0,8 m/ s |
| % de recouvrement entre deux passages du laser | 15 - 25 % |
| Température du frittage final | 1380°C |
| Durée du palier à 1380°C | 2 heures |
| Diamètre moyen de pores obtenu | 20-30 µm |

### Exemple 2 : SLS / support + couche

| Matériau | Oxyde de titane | |
|---|---|---|
| Taille moyenne des grains de la poudre | 25-35µm | |
| Epaisseur du lit de poudre | 40 µm | |
| Focalisation (diamètre du faisceau laser au point d'impact avec la poudre) | 120 µm | |
| Atmosphère de la chambre | Air | |
| Puissance du laser | 200 W | |

| | Support | Couche séparatrice |
|---|---|---|
| Vitesse de déplacement du laser | 0,8 m/s | 1 m/s |
| % de recouvrement entre deux passages du laser | 15 - 25 % | |
| Température du frittage final | 1380°C | |
| Durée du palier à 1380°C | 2 heures | |
| Diamètre moyen de pores obtenu | 20-30 µm | 1-2 µm |

### Exemple 3 : SLS / support seul

| Matériau | Carbure de silicium |
|---|---|
| Taille moyenne des grains de la poudre | 75-80 µm |
| Epaisseur du lit de poudre | 120 µm |
| Focalisation (diamètre du faisceau laser au point d'impact avec la poudre) | 120 µm |
| Atmosphère de la chambre | Argon |
| Puissance du laser | 200 W |
| Vitesse de déplacement du laser | 0,6 m/s |
| % de recouvrement entre deux passages du laser | 30 - 35 % |
| Diamètre moyen de pores obtenu | 25-30 µm |

Dans ce cas, aucun frittage final n'est nécessaire.

### Exemple 4 : Impression 3D

| Matériau | Oxyde de titane |
|---|---|
| Taille moyenne des grains de la poudre | 30-35 µm |
| Epaisseur du lit de poudre | 80 µm |
| Type de liant | Résine furanique |
| % de liant | 20 % |
| Vitesse de construction linéaire de la forme | 30 mm/h |
| Température du frittage final | 1500 °C |
| Durée du palier à 1500°C | 6 heures |
| Diamètre moyen de pores obtenu | 10-12 µm |

Dans le cas des exemples 1, 3 et 4, la fabrication de l'élément de séparation par flux tangentiel est complétée par le dépôt d'une couche séparatrice à la surface des canaux réalisée à partir de la suspension suivante.

### Préparation de la suspension par broyage en broyeur à boulets

| Matériau | Oxyde de titane |
|---|---|
| Taille moyenne des grains de la poudre avant broyage | 3,6 µm |
| Ratio Oxyde de titane / eau | 0,4 |
| Durée du broyage | 5 heures |
| Taille moyenne des grains de la poudre après broyage | 1 µm |
| Ajout d'eau pour réglage de la rhéologie | 200 à 400 centipoises |

Une couche séparatrice de microfiltration ayant un seuil de coupure de 1,4 µm est obtenue après un dépôt direct sur le support de la manière suivante.

On fait pénétrer, par pompage, la suspension dans les canaux pour la mettre en contact avec la surface des canaux. Le mécanisme moteur du dépôt est l'attraction du liquide de la suspension par la porosité du support poreux.

L'épaisseur du dépôt de particules d'oxyde de titane en surface et donc la masse déposée par unité de surface dépend du temps de séjour de la suspension dans les canaux du support.

| | |
|---|---|
| Temps de séjour de la suspension dans les canaux | 30 secondes |
| Masse déposée | 50 à 60 g/m² |

L'opération est répétée deux fois pour une masse déposée finale de 110 g/m² environ.

### Cycle de cuisson pour un frittage de la couche

| | |
|---|---|
| Vitesse de montée en température jusqu'à 1200°C | 100°C/heure |
| Durée du palier à 1200°C | 1 heure |
| Refroidissement naturel | |

La fabrication d'éléments de séparation par flux tangentiel de microfiltration avec des seuils de coupures inférieurs à 1,4 µm et des éléments de séparation, par flux tangentiel d'ultrafiltration et de nanofiltration seront obtenus par dépôts successifs sur une telle première couche à partir de suspensions plus fines avec des cycles thermiques adaptés.

L'invention n'est pas limitée aux exemples décrits et représentés car diverses modifications peuvent y être apportées sans sortir de son cadre.

## Revendications

1. Elément monolithe de séparation par flux tangentiel d'un milieu fluide à traiter en un filtrat et un rétentat, ledit élément de séparation comportant un support poreux rigide rectiligne **(2)** de structure tridimensionnelle à l'intérieur duquel est aménagé au moins un canal **(3)** pour la circulation du milieu fluide à traiter en vue de récupérer un filtrat à la surface extérieure **(5)** du support, la surface extérieure **(5)** du support présentant un profil constant, de sorte que toutes les lignes génératrices extérieures parallèles à l'axe central du support sont des droites toutes parallèles entre elles, **caractérisé en ce que** le support poreux rigide monolithique **(2)** comporte à partir de la paroi interne du ou des canaux, des obstacles **(9)** à la circulation du fluide à filtrer, ayant une identité de matériau et de texture poreuse avec le support ainsi qu'une continuité de matériau et de texture poreuse avec le support, de sorte que lesdits obstacles font partie intégrante du support, ces obstacles **(9)** en apparaissant entre une première **(P1)** et deuxième **(P2)** positions prises selon l'axe longitudinal **(T)** du canal génèrent un rétrécissement brusque ou un convergent dans le sens de circulation du fluide à traiter dans ledit canal pour gêner ou perturber le passage du fluide, ce rétrécissement brusque ou ce convergent étant formé respectivement par une paroi **(9a)** radiale perpendiculaire à l'axe longitudinal **(T)** ou par une paroi **(9a)** inclinée par rapport à l'axe longitudinal **(T)** selon un angle α strictement supérieur à 0° et inférieur à 90°, l'au moins un canal **(3)** pourvu d'obstacles **(9)** présentant entre son entrée **(6)** et sa sortie **(7),** une section droite de passage dont la forme et/ou l'aire et/ou son périmètre mouillé et/ou son diamètre hydraulique varie.

2. Elément monolithe de séparation par flux tangentiel selon la revendication 1, dans lequel au moins un obstacle **(9)** d'un canal **(3)** engendre une section droite de passage localement la plus étroite à l'endroit dudit obstacle, cette section droite de passage étant perpendiculaire à l'axe longitudinal **(T)** dudit canal et présentant une morphologie différente par rapport à des portions du canal situées en aval et en amont dudit obstacle.

3. Elément monolithe de séparation par flux tangentiel selon la revendication 1 ou 2, dans lequel, entre une première position prise en amont de la section droite de passage la plus étroite et une deuxième position prise au niveau de la section de passage la plus étroite, l'un des critères de la section droite de passage du canal pris parmi la liste suivante reste invariable tandis que les autres critères de la section droite de passage du canal varient, les critères étant pris parmi la forme, l'aire, le périmètre mouillé et le diamètre hydraulique de la section droite de passage du canal.

4. Elément monolithe de séparation par flux tangentiel selon la revendication 1, dans lequel, entre une première position située en amont de la section droite de passage la plus étroite et une deuxième position prise au niveau de la section de passage la plus étroite, tous les critères de la section droite de passage du canal pris parmi la liste suivante restent invariables à savoir la forme, l'aire, le périmètre mouillé et le diamètre hydraulique, en considérant que la section droite de passage du canal est non circulaire et subit une rotation.

5. Elément monolithe de séparation par flux tangentiel selon l'une des revendication 1 à 4, dans lequel au moins un obstacle **(9)** d'un canal **(3)** présente une section de passage droite perpendiculaire à l'axe longitudinal **(T)** dudit canal, cette section de passage droite tournant autour de l'axe longitudinal dudit canal, entre 2 positions prises selon cet axe longitudinal du canal.

6. Elément monolithe de séparation par flux tangentiel selon la revendication 5, dans lequel au moins un obstacle **(9)** d'un canal **(3)** présente une section de passage droite tournant autour de l'axe longitudinal dudit canal, de façon discontinue entre les extrémités dudit canal.

7. Elément monolithe de séparation par flux tangentiel selon l'une des revendications 1 à 6 comportant au moins une couche séparatrice **(4)** continûment déposée sur les parois internes **(3₁)** des canaux **(3)** et venant recouvrir entièrement les obstacles **(9).**

8. Elément monolithe de séparation par flux tangentiel selon l'une des revendications 1 à 7, dans lequel le support poreux **(2)** est réalisé en un matériau organique ou inorganique.

9. Elément monolithe de séparation par flux tangentiel selon l'une des revendications 7 ou 8, dans lequel les couches séparatrices voire des couches intermédiaires sont réalisées en un matériau organique ou inorganique.

10. Elément monolithe de séparation par flux tangentiel selon l'une des revendications 1 à 9, dans lequel la structure tridimensionnelle du support poreux **(2)** présente différentes strates de matériaux dont les épaisseurs correspondent à celles des lits de matériau successivement consolidés, lesdites strates pouvant être mises en évidence par microscopie optique ou microscopie électronique à balayage.

11. Procédé de fabrication d'un élément de séparation **(1)** par flux tangentiel selon l'une des revendications 1 à 10, dans lequel la structure tridimensionnelle du support est réalisée par techniques additives par formation de strates élémentaires superposées et liées successivement entre elles, de manière à faire croître progressivement la forme tridimensionnelle souhaitée.

12. Procédé selon la revendication 11 consistant à réaliser la structure dimensionnelle, par répétition des étapes suivantes :
- réalisation d'un lit continu d'une matière destinée à former le support poreux, le lit étant d'épaisseur constante selon une surface supérieure à la section dudit support poreux prise au niveau de la strate ;
- consolidation localisée selon un motif déterminé pour chaque strate, d'une partie de matière réalisée pour créer la strate élémentaire, et liaison simultanée de la strate élémentaire ainsi formée à la strate précédente.

13. Procédé de fabrication selon la revendication 12 consistant à réaliser des lits continus de matière solide se présentant sous la forme d'une poudre ou de matière liquide tels que des résines photopolymérisables.

14. Procédé de fabrication selon l'une des revendications 11 à 13 consistant à réaliser un lit continu d'une matière solide se présentant sous la forme d'une poudre organique ou inorganique.

15. Procédé de fabrication selon la revendication 11 consistant à réaliser un lit continu d'un milieu se présentant sous la forme d'un précurseur liquide photopolymérisable dans lequel a été disposée une poudre inorganique.

16. Procédé de fabrication selon la revendication 11, dans lequel chaque strate est réalisée par fusion continue ou discontinue d'un fil d'un précurseur solide thermofusible qui est soit un polymère organique thermofusible utilisé seul pour réaliser un support organique et une couche organique, ou soit un mélange d'un polymère organique thermofusible et d'une poudre inorganique céramique, pour réaliser un support de nature inorganique.

17. Procédé de fabrication selon la revendication 11 consistant à créer successivement des cordons de matière par projection d'une poudre fondue dans le faisceau d'un laser.

## Patentansprüche

1. Monolithisches Element zur Trennung eines zu behandelnden fluiden Mediums in ein Filtrat und ein Retentat durch tangentiale Strömung, wobei das Trennelement einen geradlinigen starren porösen Träger (2) mit dreidimensionaler Struktur umfasst, in dem wenigstens ein Kanal (3) für die Zirkulation des zu behandelnden fluiden Mediums angeordnet ist, um ein Filtrat auf der Außenfläche (5) des Trägers zu gewinnen, wobei die Außenfläche (5) des Trägers ein konstantes Profil aufweist, so dass alle äußeren erzeugenden Linien, die parallel zur Mittelachse des Trägers verlaufen, Geraden sind, welche alle parallel zueinander verlaufen, **dadurch gekennzeichnet, dass** der monolithische starre poröse Träger (2) ausgehend von der Innenwand des Kanals oder der Kanäle Hindernisse (9) für die Zirkulation des zu filternden Fluids umfasst, die hinsichtlich Material und poröser Struktur mit dem Träger identisch sind sowie eine Kontinuität an Material und poröser Struktur mit dem Träger aufweisen, so dass die Hindernisse ein integraler Bestandteil des Trägers sind, wobei diese Hindernisse (9), indem sie zwischen einer ersten (P1) und einer zweiten (P2) Position entlang der Längsachse (T) des Kanals auftreten, eine plötzliche Verjüngung oder eine Konvergenz in Zirkulationsrichtung des zu behandelnden Fluids in dem Kanal aufweisen, um den Durchgang des Fluids zu behindern oder zu stören, wobei diese plötzliche Verengung oder diese Konvergenz durch eine radiale Wand (9a) senkrecht zur Längsachse (T) bzw. durch eine Wand (9a) gebildet wird, die gegenüber der Längsachse (T) unter einem Winkel α geneigt ist, der streng größer als 0° und kleiner als 90° ist, wobei der wenigstens eine Kanal (3), der mit Hindernissen (9) versehen ist, zwischen seinem Einlass (6) und seinem Auslass (7) einen Durchgangsquerschnitt aufweist, dessen Form und/oder Fläche und/oder benetzter Umfang und/oder hydraulischer Durchmesser variiert.

2. Monolithisches Element zur Trennung durch tangentiale Strömung nach Anspruch 1, bei dem wenigstens ein Hindernis (9) eines Kanals (3) einen Durchgangsquerschnitt erzeugt, der an der Stelle des Hindernisses lokal am engsten ist, wobei dieser Durchgangsquerschnitt zu der Längsachse (T) des Kanals senkrecht verläuft und in Bezug auf Abschnitte des Kanals, die stromabwärts und stromaufwärts des Hindernisses gelegen sind, eine unterschiedliche Morphologie aufweist.

3. Monolithisches Element zur Trennung durch tangentiale Strömung nach Anspruch 1 oder 2, bei dem zwischen einer ersten Position stromaufwärts des engsten Durchgangsquerschnitts und einer zweiten Position im Bereich des engsten Durchgangsquerschnitts eines der Kriterien des Durchgangsquerschnitts des Kanals aus der folgenden Liste unveränderlich bleibt, während die anderen Kriterien des Durchgangsquerschnitts des Kanals variieren, wobei die Kriterien aus Form, Fläche, benetztem Umfang und hydraulischem Durchmesser des Durchgangsquerschnitts des Kanals genommen sind.

4. Monolithisches Element zur Trennung durch tangentiale Strömung nach Anspruch 1, bei dem zwischen einer ersten Position, die stromaufwärts des engsten Durchgangsquerschnitts gelegen ist, und einer zweiten Position im Bereich des engsten Durchgangsquerschnitts, alle Kriterien des Durchgangsquerschnitts des Kanals aus der folgenden Liste, nämlich Form, Fläche, benetzter Umfang und hydraulischer Durchmesser unveränderlich bleiben, unter Berücksichtigung dessen, dass der Durchgangsquerschnitt des Kanals nicht kreisförmig ist und eine Drehung erfährt.

5. Monolithisches Element zur Trennung durch tangentiale Strömung nach einem der Ansprüche 1 bis 4, bei dem wenigstens ein Hindernis (9) eines Kanals (3) einen Durchgangsquerschnitt senkrecht zur Längsachse (T) des Kanals aufweist, wobei dieser Durchgangsquerschnitt sich zwischen zwei Positionen entlang dieser Längsachse des Kanals um die Längsachse des Kanals dreht.

6. Monolithisches Element zur Trennung durch tangentiale Strömung nach Anspruch 5, bei dem wenigstens ein Hindernis (9) eines Kanals (3) einen Durchgangsquerschnitt aufweist, der sich zwischen den Enden des Kanals um die Längsachse des Kanals diskontinuierlich dreht.

7. Monolithisches Element zur Trennung durch tangentiale Strömung nach einem der Ansprüche 1 bis 6, umfassend wenigstens eine Trennschicht (4), die auf den Innenwänden (3₁) der Kanäle (3) kontinuierlich abgeschieden ist und die Hindernisse (9) vollständig bedeckt.

8. Monolithisches Element zur Trennung durch tangentiale Strömung nach einem der Ansprüche 1 bis 7, bei dem der poröse Träger (2) aus einem organischen oder anorganischen Material gefertigt ist.

9. Monolithisches Element zur Trennung durch tangentiale Strömung nach einem der Ansprüche 7 oder 8, bei dem die Trennschichten, ja sogar Zwischenschichten aus einem organischen oder anorganischen Material gefertigt sind.

10. Monolithisches Element zur Trennung durch tangentiale Strömung nach einem der Ansprüche 1 bis 9, bei dem die dreidimensionale Struktur des porösen Trägers (2) unterschiedliche Materialschichten aufweist, deren Dicken denjenigen von nacheinander verfestigten Materialbetten entsprechen, wobei die Schichten durch optische Mikroskopie oder Rasterelektronenmikroskopie nachgewiesen werden können.

11. Verfahren zur Herstellung eines Elements zur Trennung (1) durch tangentiale Strömung nach einem der Ansprüche 1 bis 10, bei dem die dreidimensionale Struktur des Trägers durch additive Techniken durch Ausbilden von übereinander angeordneten und sukzessive untereinander verbundenen Elementarschichten hergestellt wird, um die gewünschte dreidimensionale Form nach und nach wachsen zu lassen.

12. Verfahren nach Anspruch 11, das darin besteht, die dimensionale Struktur durch Wiederholen der folgenden Schritte herzustellen:
- Herstellen eines durchgehenden Bettes aus einem Material, das dazu bestimmt ist, den porösen Träger zu bilden, wobei das Bett entlang einer Oberfläche eine konstante Dicke aufweist, die größer ist als der Querschnitt des porösen Trägers im Bereich der Schicht,
- stellenweises Verfestigen eines zum Erzeugen der Elementarschicht hergestellten Materialteils nach einem für jede Schicht bestimmten Muster und gleichzeitiges Verbinden der so gebildeten Elementarschicht mit der vorherigen Schicht.

13. Herstellungsverfahren nach Anspruch 12, das darin besteht, durchgehende Betten aus festem Material, welches in Form eines Pulvers vorliegt, oder aus flüssigem Material, wie photopolymerisierbaren Harzen, herzustellen.

14. Herstellungsverfahren nach einem der Ansprüche 11 bis 13, das darin besteht, ein durchgehendes Bett aus einem festen Material, welches in Form eines organischen oder anorganischen Pulvers vorliegt, herzustellen.

15. Herstellungsverfahren nach Anspruch 11, welches darin besteht, ein durchgehendes Bett aus einem Medium herzustellen, welches in Form eines photopolymerisierbaren flüssigen Vorläufers vorliegt, in dem ein anorganisches Pulver angeordnet wurde.

16. Herstellungsverfahren nach Anspruch 11, bei dem jede Schicht durch kontinuierliches oder diskontinuierliches Schmelzen eines Drahtes aus einem festen warmschmelzbaren Vorläufer hergestellt wird, der entweder ein warmschmelzbares organisches Polymer ist, das allein zur Herstellung eines organischen Trägers und einer organischen Schicht verwendet wird, oder eine Mischung aus einem warmschmelzbaren organischen Polymer und einem anorganischen Keramikpulver ist, um einen Träger anorganischer Natur herzustellen.

17. Herstellungsverfahren nach Anspruch 11, das darin besteht, nacheinander Materialstränge durch Spritzen eines in dem Strahl eines Lasers geschmolzenen Pulvers zu erzeugen.

## Claims

1. A monolithic tangential flow separator element for separating a fluid medium for treatment into a filtrate and a retentate, said separator element comprising a rectilinear rigid porous support (2) of three-dimensional structure having arranged therein at least one channel (3) for passing a flow of a fluid medium for treatment in order to recover a filtrate from the outside surface (5) of the support, the outside surface (5) of the support presenting a profile that is constant such that all of the outside generator lines parallel to the central axis of the support are straight lines that are all parallel to one another, **characterized in that** the monolithic rigid porous support (2) includes obstacles (9) to the flow of the fluid for filtering starting from the inside wall(s) of the channel(s), the obstacles (9) having identity of material and of porous texture with the support and having continuity of material and of porous texture with the support, these obstacles (9), by appearing between a first and a second positions (P1, P2) taken along the longitudinal axis (T) of the channel, generating a sudden narrowing or a converging nozzle in the flow direction of the fluid for treatment in said channel in order to impede or disturb the flow of the fluid, this sudden narrowing or this convergent nozzle being formed respectively by a radial wall (9ₐ) that extends perpendicularly to the longitudinal axis (T) or by a wall (9ₐ) that slopes relative to the longitudinal axis (T) at an angle α that is strictly greater than 0° and less than 90°, the at least one channel (3) provided with obstacles (9) presenting between its inlet (6) and its outlet (7) a flow right section of varying shape and/or area and/or wetted perimeter and/or hydraulic diameter.

2. A monolithic tangential flow separator element according to claim 1, wherein at least one obstacle (9) of a channel (3) generates a flow right section that is locally narrower at the location of said obstacle, said flow right section being perpendicular to the longitudinal axis (T) of said channel and presenting a shape that is different from portions of the channel situated upstream and downstream from said obstacle.

3. A monolithic tangential flow separator element according to claim 1 or 2, wherein between a first position situated upstream from the narrowest flow right section and a second position situated at the narrowest flow right section, one of the criteria of the flow right section of the channel taken from the following list remains invariable, while the other criteria of the flow right section of the channel vary, the criteria being taken from: the shape, the area, the wetted perimeter, and the hydraulic diameter of the flow right section of the channel.

4. A monolithic tangential flow separator element according to claim 1, wherein between a first position situated upstream from the narrowest flow right section and a second position situated at the narrowest flow right section, all of the criteria of the flow right section of the channel taken from the following list remain invariable, namely: the shape, the area, the wetted perimeter, and the hydraulic diameter considering that the flow section is not circular and turns.

5. A monolithic tangential flow separator element according to any one of claims 1 to 4, wherein at least one obstacle (9) of the channel (3) presents a flow right section perpendicular to the longitudinal axis (T) of said channel, said flow right section turning about the longitudinal axis of said channel between two positions taken along the longitudinal axis of the channel.

6. A monolithic tangential flow separator element according to claim 5, wherein at least one obstacle (9) of the channel (3) presents a flow right section that turns about the longitudinal axis of said channel in discontinuous manner between the ends of said channel.

7. A monolithic tangential flow separator element according to any one of claims 1 to 6, including at least one separator layer (4) deposited continuously on the inside walls (3₁) of the channels (3) and completely covering the obstacles (9).

8. A monolithic tangential flow separator element according to any one of claims 1 to 7, wherein the porous support (2) is made of a material that is organic or inorganic.

9. A monolithic tangential flow separator element according to claim 7 or claim 8, wherein the separator layers or intermediate layers are made of a material that is organic or inorganic.

10. A monolithic tangential flow separator element according to any one of claims 1 to 9, wherein the three-dimensional structure of the porous support (2) presents different plies of material that can be observed by optical microscopy or by scanning electron microscopy, the thickness of the different plies corresponding to the thickness of the successively bonded consolidated beds of material.

11. A method of fabricating a tangential flow separator element (1) according to any one of claims 1 to 10, wherein the three-dimensional structure of the support is made thanks to additive techniques by forming individual plies that are superposed and successively bonded to one another so as to build up the desired three-dimensional shape progressively.

12. A method according to claim 11, consisting in making the three-dimensional structure by repeating the following steps:
• making a continuous bed of a material that is to form the porous support, the bed being of constant thickness over an area greater than the section of said porous support at the ply;
• locally consolidating some of the material to form a pattern that is determined for each ply, so as to create the individual ply while simultaneously bonding the individual ply as made in this way to the preceding ply.

13. A fabrication method according to claim 12, consisting in making continuous beds of solid material in the form of a powder or of liquid material such as photopolymerizable resins.

14. A fabrication method according to any one of claims 11 to 13, consisting in making a continuous bed of a solid material in the form of an organic or inorganic powder.

15. A fabrication method according to claim 11, consisting in making a continuous bed of a medium in the form of a photopolymerizable liquid precursor having an inorganic powder disposed therein.

16. A fabrication method according to claim 11, wherein each ply is made by continuous or discontinuous melting of a string of a thermofusible solid precursor that is either a thermofusible organic polymer used on its own to make an organic support and an organic layer, or else a mixture of a thermofusible organic polymer and of a ceramic inorganic powder, to make a support of inorganic nature.

17. A fabrication method according to claim 11, consisting in creating successive beads of material by spraying a powder that is melted in a laser beam.
